# EUROPEAN PATENT SPECIFICATION

(11) **EP 0 838 039 B1**
(45) Date of publication and mention of the grant of the patent: **13.03.2002**
(21) Application number: 96921726.4
(22) Date of filing: 20.06.1996
(51) Int. Cl.: C08F 220/30, G02B 1/04

(54) **NOVEL PHOTOCHROMIC ORGANIC MATERIALS**
ORGANISCHE PHOTOCHROME MATERIALIEN
NOUVEAUX MATERIAUX ORGANIQUES PHOTOCHROMES

(30) Priority: 12.07.1995 FR 9508424; 28.09.1995 US 4492 P
(43) Date of publication of application: 29.04.1998
(73) Proprietor: CORNING INCORPORATED, Corning, N.Y. 14831 (US)
(72) Inventor: HENRY, David, 91150 Morigny-Champigny (FR); VIAL, Jacques, Jean, F-77123 Noisy-sur-Ecole (FR)
(74) Representative: Le Roux, Martine
(86) International application number: US9610654
(87) International publication number: WO9703373

(56) References cited:
- WO-A-92/05209
- US-A- 4 713 244
- US-A- 5 170 192
- US-A- 5 292 350
- US-A- 5 395 566
- US-A- 5 442 022
- US-A- 5 552 091

## Description

### BACKGROUND OF THE INVENTION

The invention relates to novel photochromic transparent organic materials with high index of refraction presenting no optical distortion in solid form, a method for their preparation, and the articles made from these materials.

It is difficult to prepare such a photochromic ophthalmic lens made of plastic material. Ideally, the polymer matrix of such a lens should be crosslinked thermally, free of optical distortion in solid form and able to receive appropriate mixtures of photochromic dyes and to be crosslinked in the presence of such appropriate mixtures of photochromic dyes, for example spiroxazines and chromenes, to obtain a material which presents a high initial transmission before exposure and a high capacity for darkening after exposure, all with rapid darkening and lightening kinetics. In addition, the material should have a low thermal dependence, a high resistance to fatigue, and as high an index of refraction as possible.

Obviously, no such ideal material exists to date.

WO-A-92/05209 describes a copolymer that is free of optical distortions and is suitable for the manufacture of eyeglasses, and is obtained by a radical polymerization of a first monomer with formula I 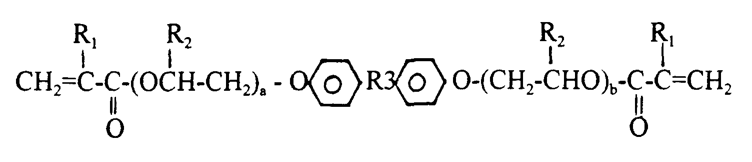 where a and b are whole numbers from 0 to 4, R₁ and R₂ = H or CH₃, and R₃ =-O-, -S-, -CO-, -SO₂-, -CH₂-, -CH=CH- or 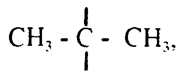 with a second monomer, which can be styrene or a styrene derivative and, optionally, a third monomer, which can be a vinyl aromatic compound or an aromatic methacrylate, in the presence of an initiator of the peroxide type and of a chain transfer agent selected from various brominated compounds.

This copolymer could be a good polymer matrix for an ophthalmic article, such as a lens.

However, when one tries to incorporate ophthalmic dyes in the copolymerizable composition to impart ophthalmic properties to the matrix obtained after copolymerization, it can be observed that said dyes are destroyed by the peroxide initiator.

Even if the peroxide initiator is replaced by a milder radical polymerization initiator, such as a diazo compound, for example, azobisisobutyronitrile, the material obtained is still unsatisfactory, because the photochromic dyes are inhibited by the brominated chain transfer agent used, as has been observed by the present inventors. It is also necessary to later incorporate the dyes into the matrix notably by a specific thermal diffusion method, which increases the cost price of the material and complicates its manufacturing process.

Thus, there is a need for high-performance ophthalmic materials that are easy and inexpensive to manufacture.

The present invention is intended to meet this need.

### SUMMARY OF THE INVENTION

More particularly, the present invention concerns novel ophthalmic transparent organic materials presenting an index of refraction of more than 1.55, which are free of optical distortions and are prepared by radical polymerization of a polymerizable composition comprising:
a) 80-95 wt% of at least one monomer represented by the general formula (I): 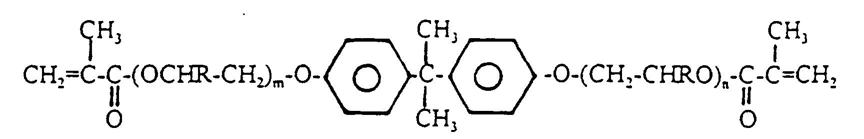 where R = H or CH₃, and m and n are independently 1 or 2;
b) 5-20 wt% of at least one aromatic monovinyl monomer represented by the general formula (II):
   where R₁ = H or 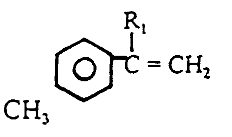
c) an effective quantity of at least one dye that imparts photochromic properties to the material, selected from the groups of spiroxazines, spiropyrans and chromenes;
d) an effective quantity of a chain transfer agent; and
e) an effective quantity of a radical polymerization initiator;
characterized in that the chain transfer agent is a linear C₂-C₁₆ alkanethiol or a bis-mercaptoalkylether and the radical polymerisation initiator is a diazo compound.

Optionally, the polymerizable composition can contain, in addition, f) up to 10 wt% of an aromatic divinyl monomer represented by the general formula (III):
where R₁ = H or

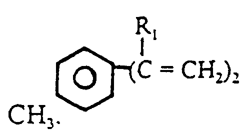

The invention also relates to a method for the preparation of novel photochromic transparent organic materials presenting an index of refraction of more than 1.55, which are free of optical distortions, characterized in that it consists of carrying out a radical polymerization of a polymerizable composition comprising:
a) 80-95 wt% of at least one monomer represented by the general formula (I): 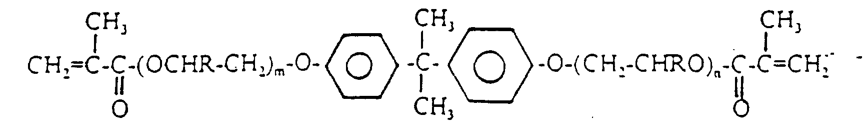 where R = H or CH₃, and m and n are, independently, 1 or 2;
b) 5-20 wt% of at least one aromatic monovinyl monomer represented by the general formula (II):
   R₁ = H or 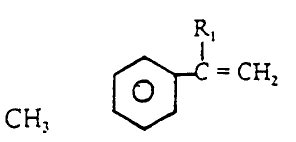
c) an effective quantity of at least one dye that imparts photochromic properties to the material, selected from the groups of spiroxazines, spiropyrans and chromenes;
d) an effective quantity of a chain transfer agent selected from the linear C₂-C₁₆ alkanethiols and the bis-mercaptoalkylethers ; and
e) an effective quantity of a radical polymerization initiator selected from the diazo initiators.

Optionally, it is also possible that the polymerizable composition can contain, in addition:
f) up to 10 wt% of an aromatic divinyl monomer represented by the general formula (III):
   where R₁ = H or

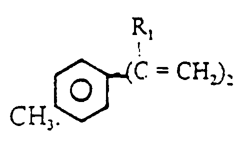

The monomers (a) with formula I are well known and commercially available. For example, a monomer with formula I where R = H and m and n = 2 is marketed by the company Akzo under the trade name Diacryl 121. Styrene and methylstyrene are the monomers (b) with formula II. The monomers (f) with formula III are represented by divinylbenzene and di(methylvinyl)benzene.

By an appropriate selection of the monomers (a), (b) and (f) and their proportions, the kinetic parameters of the final photochromic material (darkening rate, bleaching rate) can be adjusted as desired: the addition of a monomer (b) such as styrene to the dimethacrylic compound (a), besides having an advantageous effect on the optical properties, also reduces the kinetics of the dyes that would intrinsically be too rapid in the methacrylic matrix. Conversely, the optional incorporation of a third monomer (f), such as divinylbenzene, on the contrary allows the acceleration of a dye that would be too slow in the methacrylic matrix. Thus, by a careful selection of the ratio by weight of monomer (b):optional monomer (f), it is possible in a dimethacrylic matrix such as the one described to adjust the kinetic parameters of the photochromic process to a desired value without altering the optical quality of the materials obtained and while preserving a high index of refraction.

The photochromic dye (c) is selected from the general classes of spiroxazines, spiropyrans and chromenes with photochromic properties imparted. A very large number of photochromic dyes of this type have been described in the literature and are commercially available. Usable spiroxazine dyes have been described notably in U.S. Patent Nos. 3,562,172, 4,634,767, 4,637,698, 4,720,547, 4,756,973, 4,785,097, 4,792,224, 4,816,584, 4,831,142, 4,909,963, 4,931,219, 4,936,995, 4,986,934, 5,114,621, 5,139,707, 5,233,038, 4,215,010, 4,342,668, 4,699,473, 4,851,530, 4,913,544, 5,171,636, 5,180,524, 5,166,345 and in EP-A 0,508,219, 0,232,295, and 0,171,909, among others. Usable chromenes have been described in U.S. Patent Nos. 3,567,605, 4,889,413, 4,931,221, 5,200,116, 5,066,818, 5,244,602, 5,238,981, 5,106,998, 4,980,089, 5,130,058, and in EP-A 0,562,915, among others. Useful spiropyrans have also been described in the following general works:
· Photochromism, G. Brown, Editor, Techniques of Chemistry, Wiley Interscience, Vol. III, 1971, Chapter III. pages 45-294, R.C. Bertelson.
· Photochromism, Molecules & Systems, Edited by H. Dürr, H. Bouas-Laurent, Elsevier 1990, Chapter 8: Spiropyrans, pages 314-455, R. Guglielmetti.

As a indication, the proportion of the photochromic dyes to be incorporated in the polymerizable composition can range from 0.01 to 1.0 wt%, preferably 0.05-0.5 wt%, with respect to the weight of the monomers.

It is also preferred to use a combination of photochromic dyes which impart a gray or brown tint in the darkened state.

The chain transfer agent (d) is selected from the C₂-C₁₆ linear alkanethiols. Linear C₄-C₁₆ alkanethiols are preferred, because they are less volatile than the C₂ or C₃ homologs. Specific examples are: butanethiol, pentanethiol, hexanethiol, heptanethiol, octanethiol, decanethiol, dodecanethiol and tetradecanethiol. Another product which we have found to be useful both as a chain transfer agent and as a chain extender is bis-mercaptoethyl ether (MEE) having the general formula :

HS-CH₂CH₂-O-CH₂CH₂-SH.

Purely as an indication, the chain transfer agent can be incorporated in the polymerizable composition in the range of 0.1 - 6.0 wt %, advantageously of 100-5,000 ppm, for example, with respect to the monomers.

The radical polymerization initiator (e) is selected from the diazo initiator. These compounds are well known and available commercially. Specific examples are azobisisobutyronitrile (AIBN) and 2,2'-azobis(2-methylbutyronitrile) (AMBN), among others. Purely as an indication, a proportion of initiator equivalent to about 0.05-0.5 wt% of the monomers can be incorporated in it.

The joint use of an alkanethiol as ingredient (d) and a diazo compound as ingredient (e) allows the obtention of the advantages procured by the invention, that is, the possibility of preparing a photochromic material with excellent properties by a radical polymerization in the presence of at least one photochromic dye.

The invention concerns the articles made in their entirety or in part of an organic photochromic material according to the invention. Examples of such articles are ophthalmic corrective lenses, sun-protection lenses, window glass for vehicles or buildings, etc. In these articles, the photochromic material of the invention can comprise the entire thickness of the article (solid article), or it can be in the form of a film or a stratified layer applied to a transparent or mineral support.

The ophthalmic lenses are the preferred articles, and they can be produced conveniently by carrying out the polymerization in lens molds, for example, as described in U.S. Patent Nos. 2,242,386, 3,136,000 or 3,881,683.

In order to explain the invention clearly, the following examples are given. All the proportions indicated are parts by weight. In all the examples, the polymerization of the polymerizable composition is conducted in a lens mold under the following conditions: The polymerizable composition is heated slowly until the beginning of the thermal degradation of the diazo compound (e) with release of free radicals. Once the temperature has reached 53°C, it is maintained for 16 hours; then, within 3 hours, the temperature is raised to 90° C, and then maintained for 2 hours. The lens obtained is then removed from the mold. The raw materials used in the examples are the following:

| Monomers: | |
|---|---|
| Diacryl 121 (available from Akzo Chemical) | (DIA) |
| Styrene | (STY) |
| Divinylbenzene | (DVB) |
| α-Methylstyrene | (MST) |

| Catalysts: | |
|---|---|
| 2,2'-Azobis-2-methylbutyronitrile | (AMBN) |
| Azobisisobutysonitrile | (AIBN) |

| Chain transfer agent: | |
|---|---|
| Dodecanethiol (according to the invention) | (DDT) |
| Tetrabromomethane (comparative example) | (TBM) |
| Bis-mercapoethyl ether | (MEE) |

| Photochromic dyes: | | |
|---|---|---|
| **Name** | **Manufacturer** | **Chemical type** |
| Blue D | (Great Lakes) | Spiroxazine |
| Red PNO | (Great Lakes) | Spiroxazine |
| Yellow L | (Great Lakes) | Chromene |
| Sea Green | (James Robinson Ltd.) | Spiroxazine |
| Berry Red | (James Robinson Ltd.) | Chromene |

### Examples 1-8

Examples 1-8 show the efficacy of the chain transfer agents (DDT) and (MEE) in eliminating optical distortions (For this purpose only, the examples are provided in polymerizable compositions without photochromic dye).

| Ex | Monomers (g) | | | Chain Transfcr Agent (g) | | | Catalyst | | Appearance # | n_{d} |
|---|---|---|---|---|---|---|---|---|---|---|
| | DIA | STY | DVB | DDT | TBM | MEE** | AMBN (g) | AIBN (g) | | |
| C1 | 100 | - | - | - | 0.4 | - | 0.2 | - | Lg distortions | 1 557 |
| C2 | 80 | 20 | - | - | 0.4 | - | 0.2 | - | distortions | 1 565 |
| 3 | 80 | 20 | - | 0.4 | - | - | 0.2 | - | no distortions | * |
| 4 | 80 | 10 | 10 | 0.4 | - | - | 0.2 | - | no distortions | 1 566 |
| C5 | 100 | - | - | - | - | 0 | - | 0.2 | | |
| C6 | 98 | - | - | - | - | 2 | - | 0.2 | | |
| C7 | 96 | - | - | - | - | 4 | - | 0.2 | | |
| C8 | 94 | - | - | - | - | 6 | - | 0.2 | | |

| | | | | | | | | | | |
|---|---|---|---|---|---|---|---|---|---|---|
| # *Examination in polarized light* | | | | | | | | | | |
| * *not measured* | | | | | | | | | | |
| ** *works both as a chain transfer agent as well as a chain extender* C *Comparative* | | | | | | | | | | |

The mixtures of examples 5-8 were polymerized in a lens mold using the following schedule:
- 16 hours at 65°C
- 1 hour at 70°C
- 1 hour at 80°C
- 1 hour at 110°C

The indices of refraction of the materials of comparative Examples 1, 2 and Example 4 were, respectively, 1.557, 1.565 and 1.566.

### Examples 9-16

These examples show that inventive chain transfer agents, dodecanethiol (DDT) and Bis-mercapoethyl ether (MEE) do not alter the photochromic properties of the dyes, in contrast to the tetrabromomethane (TBM) of the prior art. The chain transfer agents and the dyes used, as well as their proportions and the photochromic proportions of the material obtained, are indicated in the table below.

| Example | wt.% | | | | Before Aging | | After Aging | |
|---|---|---|---|---|---|---|---|---|
| | TBM | DDT | MEE | Dye | Tₒ⁽¹⁾ | T_{D15(2)} | Tₒ | T_{D15} |
| C 9 | - | - | - | Blue D (0.2) | 80 | 11 | 80 | 16 |
| C 10 | - | - | - | Red PNO (0.025) | 80 | 11 | 80 | 14 |
| C 11 | 0.4 | - | - | Blue D (0.2) | 80 | 80 | - | - |
| C 12 | 0.4 | - | - | Red PNO (0.025) | 0.3 | 0.3 | - | - |
| 13 | - | 0.4 | - | Blue D (0.2) | 80 | 11 | 81 | 16 |
| 14 | - | 0.4 | - | Red PNO (0.025) | 81 | 10.5 | 82 | 13 |

In examples 9-14, the polymerizable composition consisted of Diacryl 121 (80 parts). styrene (20 parts) and AMBN (0.2 part).

In example 15, the polymerizable composition consisted of 100 grams Diacryl 121, 0.2 grams AIBN and no chain transfer agent.

In example 16, the polymerizable composition consisted of 94 grams Diacryl 121; 0.2 grams of AIBN and 6 grams of MEE.

The 250-hour aging consisted of exposure to a 60,000-1x xenon lamp (λ = 560 nm), at 30°C.

Tₒ is the initial transmission of the lens T_{D15} is the transmission after 15 min of exposure at 20° C under a xenon lamp (thickness of the sample: 2 mm).

| Example | wt.% | | | | t₁₂ (sec) * | |
|---|---|---|---|---|---|---|
| | TBM | DDT | MEE | Dye | Darkening | Fading |
| C 15 | - | - | - | Blue D (0.2) | 8 | 12 |
| 16 | - | - | 0.6 | Blue D (0.2) | 14 | 18 |

| | | | | | | |
|---|---|---|---|---|---|---|
| * *t*_{*12*} *(dark) is the lime required to attain 50% darkening, while t*_{*12*} *(fade) is the lime required to attain 50% fading.* | | | | | | |

### Examples 17 and 18

These examples demonstrate that the use of AMBN instead of a conventional organic peroxide does not change the photochromic properties.

In these examples, the polymerizable composition consisted of 80 parts of Diacryl 121, 20 parts of styrene, 0.4 part of DDT and the quantities of initiator and dye indicated in the table below, which also gives the values of To and T_{D15}.

| | Ex | AMBN | Benzoyl Peroxide | Dye | Tₒ | T_{D15}* |
|---|---|---|---|---|---|---|
| Comparative | 17 | - | 0.4 | Sea Green 0.015 | 86 | 74 |
| Inventive | 18 | 0.4 | - | Sea Green 0.015 | 86 | 11 |

| | | | | | | |
|---|---|---|---|---|---|---|
| * *at λ = 630 nm (absorption wavelength of Sea Green).* | | | | | | |

### Examples 19-23

These examples show that the chain transfer agent (DDT), even if used at high concentrations, has no harmful effect on the mechanical properties of the material obtained, as shown in Examples 19-23. In these examples, the polymerizable composition consisted of 80 parts of Diacryl 121, 20 parts of styrene, 0.4 part of AMBN and the percentage of DDT indicated in the table below, which also gives the Shore D hardness of the material obtained. The polymerizable compositions for these examples were prepared without any dyes..

| Example | wt % | | Shore D Hardness |
|---|---|---|---|
| | DDT | MEE | |
| 5 | - | 0 | 85 |
| 6 | - | 2.0 | 85 |
| 7 | - | 4.0 | 84 |
| 8 | - | 6.0 | 82 |
| 19 | 0 | - | 86 |
| 20 | 0.4 | - | 87 |
| 21 | 0.8 | - | 87 |
| 22 | 1.2 | - | 86 |
| 23 | 3.0 | - | 86 |

### Examples 24-32

These examples are intended to illustrate the effects resulting from the copolymerization of monomers (b) and possibly (f) with the monomer (a).

With regard to the addition of styrene (STY) or a mixture of STY + DVB to the Diacryl 121, besides the fact that in all the cases no optical distortion is observed, the mechanical properties of the matrix are improved. Thus, an elevation of the Tg is observed in the case of the styrene (STY) and of the hardness in the case of STY + DVB. In these examples, the polymerizable composition consisted of 0.2 part of AMBN and 0.4 part of DDT, in addition to the ingredients indicated in the table below which also indicates the Tg (glass transition temperature) and the Shore D hardness of the material obtained.

| Example | DIA | STY | DVB | Tg | Shore D Hardness | DVB/STY |
|---|---|---|---|---|---|---|
| 24 | 100 | 0 | - | 110 | - | 0 |
| 25 | 95 | 5 | - | 112 | - | 0 |
| 26 | 85 | 15 | - | 121 | - | 0 |
| 27 | 80 | 20 | - | 124 | - | 0 |
| 28 | 90 | 10 | - | - | 85 | 0 |
| 29 | 90 | 10 | 2 | - | 86 | 0.2 |
| 30 | 90 | 10 | 4 | - | 86 | 0.4 |
| 31 | 90 | 10 | 6 | - | 86-87 | 0.6 |
| 32 | 90 | 10 | 10 | - | 87 | 1.0 |

### Examples 33-39

These examples show that the styrene has an effective slowing down the photochromic kinetics of the dyes in the copolymer matrix compared to a matrix formed from Diacryl 121 as the only monomer (Examples 33-37), that the divinyl-benzene has the opposite effect (Example 38), and that a mixture of styrene-divinylbenzene allows the adjustment of the kinetics to the desired value (Example 39).

In these examples, the polymerizable composition consisted of 0.2 part of AMBN, 0.4 part of DDT, 0.015 part of Sea Green dye and 0.30 part of Berry Red dye, in addition to the monomers indicated in the table below, which also indicates the time for half-bleaching of the lenses obtained.

| Example | DIA | STY | DVB | T 1/2 bleaching * (in sec., 25°C, 560 nm) | DVB/STY |
|---|---|---|---|---|---|
| 33 | 100 | - | - | 300 | - |
| 34 | 95 | 5 | - | 330 | 0 |
| 35 | 90 | 10 | - | 460 | 0 |
| 36 | 85 | 15 | - | 550 | 0 |
| 37 | 80 | 20 | - | 630 | 0 |
| 38 | 95 | - | 5 | 100 | - |
| 39 | 80 | 11.7 | 7.3 | 330 | 0.62 |

| | | | | | |
|---|---|---|---|---|---|
| ** After an exposure lime of 15 min. under the xenon lamp*. | | | | | |

The comparison of Examples 34 and 38 provides a good illustration of the contrary effects of the two monomers, styrene and divinylbenzene, which suppress the optical distortions in the matrix.

### Examples 40 and 41

These examples show that identical results can also be obtained by using α-methylstyrene instead of styrene (Examples 40-41).

In these examples, the polymerizable composition consisted of 0.2 part of AMBN, 0.4 part of DDT, 0.015 part of Sea Green dye, and 0.30 part of Berry Red dye, in addition to the monomers indicated in the table below, which also indicates the half-bleaching time of the lenses obtained.

| Example | DIA | ∝-Methylstyrene | Tg | T 1/2 bleaching (dry), (sec.) 25°C, 560 nm |
|---|---|---|---|---|
| 40 | 95 | 5 | 112 | 350 |
| 41 | 90 | 10 | 118 | 350 |

## Claims

1. Photochromic transparent organic materials presenting an index of refraction of more than 1.55, which are free of optical distortions, and prepared by radical polymerization of a polymerizable composition comprising :
a) 80-95 wt. % of at least one monomer represented by the general formula (I): 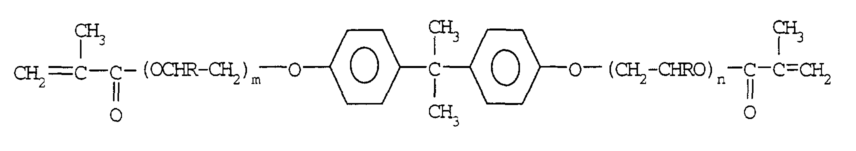 where R = H or CH₃, and m and n are independently 1 or 2 ;
(b) 5-20 wt. % of at least one aromatic monovinyl monomer represented by the general formula (II): 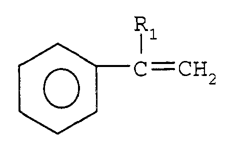 where R₁ = H or CH₃ ;
(c) an effective quantity of at least one dye that imparts photochromic properties to the material, selected from the group consisting of spiroxazines, spiropyrans and chromenes ;
(d) an effective quantity of a linear C₂-C₁₆ alkanethiol or of a bis-mercaptoalkylether chain transfer agent; and
(e) an effective quantity of a diazo compound as a radical polymerization initiator.

2. Materials according to claim 1, wherein, in formula (I), R = H and m = n = 2.

3. Materials according to claim 1 or 2, wherein the aromatic monovinyl monomer is styrene.

4. Materials according to any one of claims 1 to 3, wherein the polymerizable composition further comprises up to 10 wt. % of an aromatic divinyl monomer represented by the general formula (III): 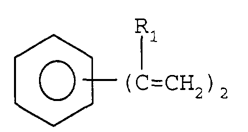 where R₁ = H or CH₃.

5. Materials according to claim 4, wherein the aromatic divinyl monomer is divinylbenzene.

6. Materials according to claim 4 or 5, wherein the ratio of the aromatic divinyl monomer to the aromatic monovinyl monomer is in the ratio of 0 to 2.

7. Materials according to claims 3 and 5, wherein the ratio of divinyl-benzene to styrene is in the range of 0.2 to 1.0.

8. Materials according to any one of claims 1 to 7, wherein the chain transfer agent (d) is a C₄-C₁₆ alkanethiol or a bis-mercaptoalkylether.

9. Materials according to claim 8, wherein the chain transfer agent is selected from the group consisting of butanethiol, pentanethiol, hexanethiol, heptanethiol, octanethiol, decanethiol, dodecanethiol, tetradecanethiol, and bis-mercaptoethyl ether.

10. Materials according to any one of claims 1 to 9, wherein the chain transfer agent is present in an amount in the range of 0.1-6.0 wt. %.

11. Materials according to any one of claims 1 to 10, **characterized in that** the quantity of chain transfer agent is in the range of 100-5,000 ppm.

12. Materials according to any one of claims 1 to 11, wherein the radical polymerization initiator (e) is selected from the group consisting of azobisisobutyronitrile and 2,2'-azobis(2-methylbutyronitrile).

13. Materials according to any one of claims 1 to 12, wherein the quantity of radical polymerization initiator (e) is in the range of 0.05-0.5 wt. %.

14. Materials according to any one of claims 1 to 13, wherein the polymerizable composition comprises a mixture of photochromic dyes, such mixture being capable of imparting a gray or brown tint to the materials in a darkened state.

15. Method for the preparation of photochromic transparent organic materials having an index of refraction of at least 1.55, said method comprising radical polymerization of a polymerizable composition comprising :
a) 80-95 wt. % of at least one monomer represented by the general formula (I): 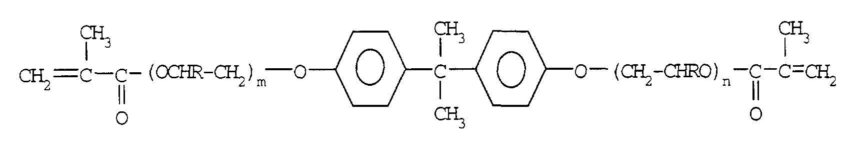 where R = H or CH₃ and m and n are, independently, 1 or 2 ;
b) 5-20 wt. % of at least one aromatic monovinyl monomer represented by the general formula (II) 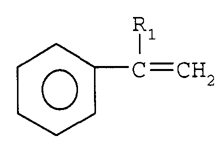 where R₁ = H or CH₃ ;
c) an effective quantity of at least one dye that imparts photochromic properties to the material, selected from the groups of spiroxazines, spiropyrans and chromenes ;
d) an effective quantity of a linear C₂-C₁₆ alkanethiol or of a bis-mercaptoalkylether chain transfer agent ; and
e) an effective quantity of a diazo compound as a radical polymerization initiator.

16. Method according to claim 15, wherein the polymerizable composition further comprises up to 10 wt. % of an aromatic divinyl monomer represented by the general formula (III): 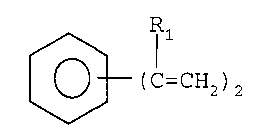 where R₁ = H or CH₃.

17. Method according to claim 15 or 16, wherein the quantity of chain transfer agent is in the range of 100-5,000 ppm.

18. Method according to any one of claims 15 to 17, wherein the quantity of a radical polymerization initiator is in the range of 0.05-0.5 wt. %.

19. Photochromic article comprising a photochromic organic material according to any one of claims 1 to 14.

20. Photochromic article according to claim 19, wherein said article is an ophthalmic or a sun-protection lens.

## Patentansprüche

1. Photochrome transparente organische Materialien, die einen Brechungsindex von mehr als 1,55 aufweisen, frei von optischen Verzerrungen sind und hergestellt sind durch radikalische Polymerisation einer polymerisierbaren Zusammensetzung, die umfasst:
a) 80 bis 95 Gew.-% mindestens eines Monomers, dargestellt durch die allgemeine Formel (I): 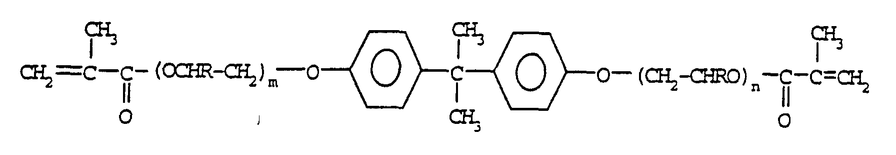 worin R = H oder CH₃, und m und n unabhängig voneinander für 1 oder 2 stehen;
(b) 5 bis 20 Gew.-% mindestens eines aromatischen Monovinylmonomers, dargestellt durch die allgemeine Formel (II): 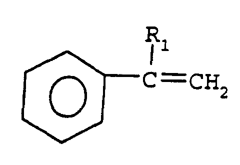 worin R₁ = H oder CH₃;
(c) eine wirksame Menge mindestens eines Farbstoffs, der dem Material photochrome Eigenschaften verleiht, ausgewählt aus der Gruppe, die besteht aus Spiroxazinen, Spiropyranen und Chromenen;
(d) eine wirksame Menge eines linearen C₂-C₁₆-Alkanthiols oder eines Bis-mercaptoalkylether-Kettenübertragungsmittels; und
(e) eine wirksame Menge einer Diazo-Verbindung als radikalischen Polymerisationsinitiator.

2. Materialien nach Anspruch 1, worin in der Formel (I) R = H und m = n = 2.

3. Materialien nach Anspruch 1 oder 2, worin das aromatische Monovinyl-Monomer Styrol ist.

4. Materialien nach einem der Ansprüche 1 bis 3, worin die polymerisierbare Zusammensetzung außerdem umfasst bis zu 10 Gew.-% eines aromatischen Divinylmonomers, dargestellt durch die allgemeine Formel (III): 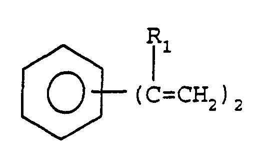 worin R₁ = H oder CH₃.

5. Materialien nach Anspruch 4, worin das aromatische Divinyl-Monomer Divinylbenzol ist.

6. Materialien nach Anspruch 4 oder 5, worin das Verhältnis zwischen dem aromatischen Divinyl-Monomer und dem aromatischen Monovinyl-Monomer in dem Bereich von 0 bis 2 liegt.

7. Materialien nach den Ansprüchen 3 und 5, worin das Verhältnis zwischen Divinylbenzol und Styrol in dem Bereich von 0,2 bis 1,0 liegt.

8. Materialien nach einem der Ansprüche 1 bis 7, worin das Kettenübertragungsmittel (d) ein C₄-C₁₆-Alkanthiol oder ein Bis-mercaptoalkylether ist.

9. Materialien nach Anspruch 8, worin das Kettenübertragungsmittel ausgewählt ist aus der Gruppe, die besteht aus Butanthiol, Pentanthiol, Hexanthiol, Heptanthiol, Octanthiol, Decanthiol, Dodecanthiol, Tetradecanthiol und Bis-mercaptoethylether.

10. Materialien nach einem der Ansprüche 1 bis 9, worin das Kettenübertragungsmittel in einer Menge in dem Bereich von 0,1 bis 6,0 Gew.-% vorliegt.

11. Materialien nach einem der Ansprüche 1 bis 10, **dadurch gekennzeichnet, dass** die Menge des Kettenübertragungsmittels in dem Bereich von 100 bis 5000 ppm liegt.

12. Materialien nach einem der Ansprüche 1 bis 11, worin der radikalische Polymerisationsinitiator (e) ausgewählt ist aus der Gruppe, die besteht aus Azobisisobutyronitril und 2,2'-Azobis(2-methylbutyronitril).

13. Materialien nach einem der Ansprüche 1 bis 12, worin die Menge des radikalischen Polymerisationsinitiators (e) in dem Bereich von 0,05 bis 0,5 Gew.-% liegt.

14. Materialien nach einem der Ansprüche 1 bis 13, worin die polymerisierbare Zusammensetzung eine Mischung von photochromen Farbstoffen umfasst, wobei diese Mischung den Materialien im verdunkelten Zustand eine graue oder braune Farbtönung verleihen kann.

15. Verfahren zur Herstellung von photochromen transparenten organischen Materialien mit einem Brechungsindex von mindestens 1,55, das umfasst die radikalische Polymerisation einer polymerisierbaren Zusammensetzung, die umfasst:
a) 80 bis 95 Gew.-% mindestens eines Monomers, dargestellt durch die allgemeine Formel (I): 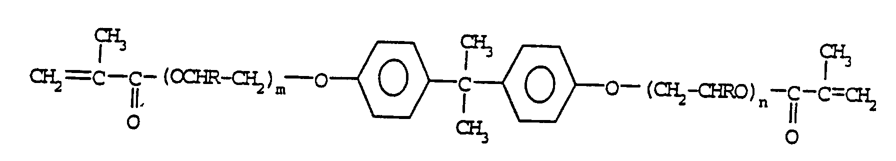 worin R = H oder CH₃ und m und n unabhängig voneinander für 1 oder 2 stehen;
b) 5 bis 20 Gew.-% mindestens eines aromatischen Monovinylmonomers, dargestellt durch die allgemeine Formel (II) 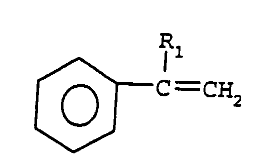 worin R₁ = H oder CH₃;
c) eine wirksame Menge mindestens eines Farbstoffs, ausgewählt aus der Gruppe der Spiroxazine, Spiropyrane und Chromene; der dem Material photochrome Eigenschaften verleiht;
d) eine wirksame Menge eines linearen C₂-C₁₆- Alkanthiol- oder Bis-mercaptoalkylether-Kettenübertragungsmittels; und
e) eine wirksame Menge einer Diazo-Verbindung als radikalen Polymerisationsinitiator.

16. Verfahren nach Anspruch 15, worin die polymerisierbare Zusammensetzung außerdem umfasst bis zu 10 Gew.-% eines aromatischen Divinyl-Monomers, dargestellt durch die allgemeine Formel (III): 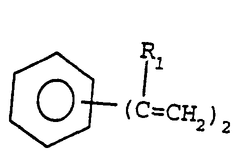 worin R₁ = H oder CH₃.

17. Verfahren nach Anspruch 15 oder 16, worin die Menge des Kettenübertragungsmittels in dem Bereich von 100 bis 5000 ppm liegt.

18. Verfahren nach einem der Ansprüche 15 bis 17, worin die Menge des radikalischen Polymerisationsinitiators in dem Bereich von 0,05 bis 0,5 Gew.-% liegt.

19. Photochromer Artikel bzw. Gegenstand, der ein photochromes organisches Material nach einem der Ansprüche 1 bis 14 umfasst.

20. Photochromer Artikel bzw. Gegenstand nach Anspruch 19, worin der genannte Artikel bzw. Gegenstand eine ophthalmische oder Sonnenschutz-Linse ist.

## Revendications

1. Matériaux organiques transparents photochromiques présentant un indice de réfraction supérieur à 1,55 qui sont exempts de distorsions optiques, et préparés par polymérisation radicalaire d'une composition polymérisable comprenant :
a) 80 à 95 % en poids d'au moins un monomère représenté par la formule générale (I): 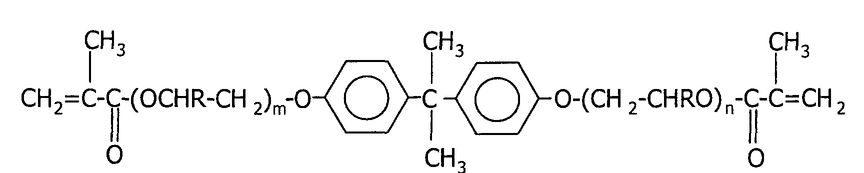 où R = H ou CH₃ et m et n sont indépendamment 1 ou 2 ;
b) 5 à 20 % en poids d'au moins un monomère monovinylique aromatique représenté par la formule générale (II) : 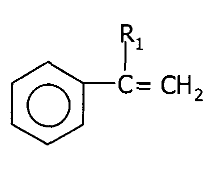 où R₁ = H ou CH₃ ;
c) une quantité efficace d'au moins un colorant conférant au matériau des propriétés photochromiques, choisi dans le groupe des spiroxazines, spiropyranes et chromènes ;
d) une quantité efficace d'un agent de transfert de chaîne alcanethiol linéaire en C₂-C₁₆ ou bis-mercaptoalkyléther ; et
e) une quantité efficace d'un composé diazoïque comme initiateur de polymérisation radicalaire.

2. Matériaux selon la revendication 1 où, dans la formule I, R = H et m = n = 2.

3. Matériaux selon la revendication 1 ou 2, où le monomère monovinylique aromatique est le styrène.

4. Matériaux selon l'une quelconque des revendications 1 à 3, où la composition polymérisable contient, en outre, jusqu'à 10 % en poids d'un monomère divinylique aromatique représenté par la formule générale (III) : 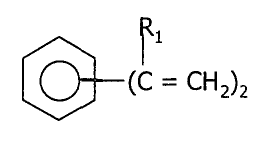 où R₁ = H ou CH₃.

5. Matériaux selon la revendication 4, où le monomère divinylique aromatique est le divinylbenzène.

6. Matériaux selon la revendication 4 ou 5, où le rapport du monomère divinylique aromatique au monomère monovinylique aromatique est dans le rapport de 0 à 2.

7. Matériaux selon les revendications 3 et 5, où le rapport du divinylbenzène au styrène est dans le domaine de 0,2 à 1,0.

8. Matériaux selon l'une quelconque des revendications 1 à 7, où l'agent de transfert de chaîne (d) est un alcanethiol en C₄-C₁₆ ou un bis-mercaptoalkyléther.

9. Matériaux selon la revendication 8, où l'agent de transfert de chaîne est choisi dans le groupe consistant en le butanethiol, le pentanethiol, l'hexanethiol, l'heptanethiol, l'octanethiol, le décanethiol, le dodécanethiol, le tétradécanethiol et le bis-mercaptoéthyléther.

10. Matériaux selon l'une quelconque des revendications 1 à 9, où l'agent de transfert de chaîne est présent en une quantité dans le domaine de 0,1-6,0 % en poids.

11. Matériaux selon l'une quelconque des revendications 1 à 10, **caractérisés en ce que** la quantité d'agent de transfert de chaîne est dans le domaine de 100 à 5 000 ppm.

12. Matériaux selon l'une quelconque des revendications 1 à 11, où l'initiateur de polymérisation radicalaire (e) est choisi dans le groupe consistant en l'azobis-isobutyronitrile et le 2,2'-azobis(2-méthylbutyronitrile).

13. Matériaux selon l'une quelconque des revendications 1 à 12, où la quantité d'initiateur de polymérisation radicalaire (e) est dans le domaine de 0,05 à 0,5 % en poids.

14. Matériaux selon l'une quelconque des revendications 1 à 13, où la composition polymérisable comprend un mélange de colorants photochromiques, un tel mélange étant capable de conférer une teinte grise ou brune aux matériaux à l'état assombri.

15. Procédé de préparation de matériaux organiques transparents photochromiques présentant un indice de réfraction d'au moins 1,55, ledit procédé comprenant la polymérisation radicalaire d'une composition polymérisable comprenant :
a) 80 à 95 % en poids d'au moins un monomère représenté par la formule générale (I) : 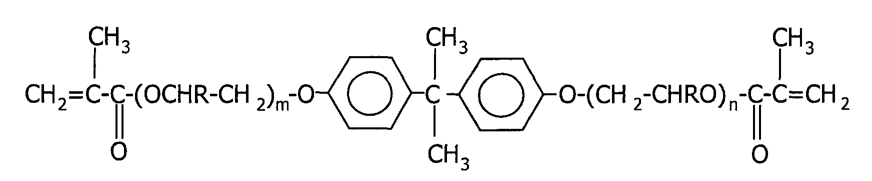 où R = H ou CH₃ et m et n sont indépendamment 1 ou 2 ;
b) 5 à 20 % en poids d'au moins un monomère monovinylique aromatique représenté par la formule générale (II) : 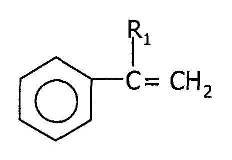 où R₁ = H ou CH₃;
c) une quantité efficace d'au moins un colorant conférant au matériau des propriétés photochromiques, choisi dans le groupe des spiroxazines, spiropyranes et chromènes ;
d) une quantité efficace d'un agent de transfert de chaîne alcanethiol linéaire en C₂-C₁₆ ou bis-mercaptoalkyléther ; et
e) une quantité efficace d'un composé diazoïque comme initiateur de polymérisation radicalaire.

16. Procédé selon la revendication 15, où la composition polymérisable comprend, en outre, jusqu'à 10 % en poids d'un monomère divinylique aromatique représenté par la formule générale (III) : 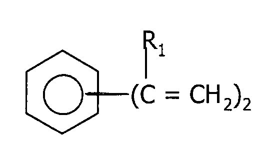 où R₁ = H ou CH₃.

17. Procédé selon la revendication 15 ou 16, où la quantité d'agent de transfert de chaîne est dans le domaine de 100 à 5 000 ppm.

18. Procédé selon l'une quelconque des revendications 15 à 17, où la quantité d'intiateur de polymérisation radicalaire est dans le domaine de 0,05 à 0,5 % en poids.

19. Article photochromique comprenant un matériau organique photochromique selon l'une quelconque des revendications 1 à 14.

20. Article photochromique selon la revendication 19, où ledit article est une lentille ophtalmique ou solaire.
